(19) Europäisches Patentamt
European Patent Office
Office européen des brevets

(11) **EP 1 763 540 B1**

(12) **EUROPEAN PATENT SPECIFICATION**

(45) Date of publication and mention
of the grant of the patent:
**16.06.2010 Bulletin 2010/24**

(21) Application number: **05765965.8**

(22) Date of filing: **05.07.2005**

(51) Int Cl.:
*C08F 2/26* (2006.01)    *C08F 2/22* (2006.01)

(86) International application number:
**PCT/KR2005/002148**

(87) International publication number:
**WO 2006/004375 (12.01.2006 Gazette 2006/02)**

(54) **METHOD OF PREPARING EMULSION POLYMER WITH HOLLOW STRUCTURE AND EMULSION POLYMER PREPARED BY THE METHOD**

VERFAHREN ZUR HERSTELLUNG VON EMULSIONSPOLYMER MIT HOHLER STRUKTUR UND DANACH HERGESTELLTES EMULSIONSPOLYMER

PROCEDE DE PREPARATION D'UN POLYMERE EN EMULSION AVEC UNE STRUCTURE CREUSE ET POLYMERE EN EMULSION OBTENU GRACE A CE PROCEDE

(84) Designated Contracting States:
**DE FR GB**

(30) Priority: **06.07.2004 KR 2004052342**

(43) Date of publication of application:
**21.03.2007 Bulletin 2007/12**

(73) Proprietor: **LG Chem, Ltd.**
**Youngdeungpo-gu**
**Seoul 150-721 (KR)**

(72) Inventors:
• **KIM, Hae-Young**
**Daejeon-city 305-758 (KR)**

• **HWANG, Jeong-Taek,**
**14-601 Samik Apt.**
**Seoul 135-958 (KR)**
• **HAN, Chang-Sun,**
**106-1101 Daerim Dure Apt.**
**Daejeon-city 305-720 (KR)**

(74) Representative: **Goddar, Heinz J. et al**
**Forrester & Boehmert**
**Pettenkoferstrasse 20-22**
**80336 München (DE)**

(56) References cited:
WO-A1-03/057738        JP-A- 2002 105 146
KR-A- 20040 017 064    KR-B1- 100 177 182
KR-B1- 870 001 808      US-A- 4 427 836
US-A- 4 594 363          US-A- 5 639 805

EP 1 763 540 B1

## Description

### Technical Field

The present invention relates to a method of preparing an emulsion polymer with a hollow structure and an emulsion polymer prepared by the method. More particularly, the present invention relates to a method of preparing a hollow emulsion polymer which can retain thin and uniform shells with no distortion by swelling a core polymer of an alkali-swellable and hydrophilic core-hydrophobic shell emulsion polymer in the presence of an alkali solution, a solvent for the shell polymer, and a solvent for the core polymer, and an emulsion polymer prepared by the method.

### Background Art

Titanium dioxide has been currently widely used as a pigment for imparting opacity and coloration to paint and paper coating. However, titanium dioxide causes serious environmental problems due to contaminants generated during its preparation, which makes its production or supply unstable. In addition, titanium dioxide is an inorganic material and thus increases a product's weight after being coated on paper, etc.

Thus, titanium dioxide used as a white pigment has been gradually partially replaced with an organic polymer material.

A hollow plastic pigment was developed as a substitute for a titanium dioxide pigment. The hollow plastic pigment can be prepared by various methods. According to a representative method, a core-shell polymer is prepared by multi-step, continuous polymerization so that an alkali-swellable resin is contained in particles, swollen in the presence of an alkali, and dried, to thereby form hollow particles.

To be used as a white pigment, the hollow particles are required to have a large particle size, a uniform particle size distribution, and a thin shell thickness. For this, swelling of cores must maximally occur. Generally, as the amount of carboxyl group-containing monomers (acid monomers) constituting cores increases, the degree of core swelling increases. However, if the amount of acid monomers in cores in core polymerization exceeds 60 wt%, polymerization stability may be lowered. Thus, there is a restriction in maximizing the degree of core swelling only by an increase in amount of acid monomers.

In addition, shells are required to have sufficient rigidity to withstand an osmotic pressure involved upon core swelling. If shell rigidity is too weak to withstand an osmotic pressure, shells may be destructed during core swelling, which makes it difficult to form hollow particles. Furthermore, if shell rigidity is sufficient to withstand an osmotic pressure but insufficient to withstand an external pressure during drying, shell distortion may occur.

In the case of excessively increasing shell rigidity to solve a shell distortion phenomenon, shells may not be swollen during core swelling, thereby leading to production of particles with small particle size and thick shell thickness.

Korean Patent No. 177,182 discloses a method of preparing an emulsion polymer by a multi-step emulsion polymerization process composed of seed formation, core polymerization, sheath polymerization, and swelling. Korean Patent Application No. 2002-49174 discloses a method of preparing an emulsion polymer, which includes preparing a core polymer, forming a shell layer composed of a shell polymer component and an unreacted shell monomer component, swelling a core/shell polymer in the presence of a volatile base, and polymerizing the unreacted shell monomer component.

### Disclosure of Invention

### Technical Problem

According to these methods, however, shell distortion or destruction still occurs during a swelling process and thin and uniform shells cannot be retained due to insufficient hollow core formation.

### Technical Solution

The present invention provides a method of preparing a hollow emulsion polymer that is free from shell distortion due to hollow core formation and can retain thin and uniform shells.

The present invention also provides a hollow emulsion polymer prepared by the method.

According to an aspect of the present invention, there is provided a method of preparing a hollow emulsion polymer, the method including: preparing an alkali-swellable and hydrophilic core polymer; preparing a hydrophobic shell polymer to obtain a core/shell polymer; and forming a hollow core by swelling the core polymer in the presence of an alkali solution, a solvent for the core polymer, and a solvent for the shell polymer.

The method may further include preparing seed particles to control the size of the core polymer prior to preparing the core polymer.

In preparing the seed particles, a mixture including a carboxyl group-containing monomers and a hydrophilic and nonionic monomer may be polymerized.

In preparing the core polymer, a mixture including a carboxyl group-containing monomer, a hydrophilic and nonionic monomer, and a crosslinkable monomer may be polymerized.

In preparing the shell polymer, a mixture including a conjugated diene monomer and a crosslinkable monomer including a three or more vinyl group-containing crosslinkable monomer may be polymerized.

The solvent for the core polymer used in forming the hollow core is at least one selected from the group consisting of tetrahydrofuran; chlorinated hydrocarbons including dichloromethane and carbon tetrachloride; esters including ethyl acetate, butyl acetate, and methyl benzoate; ketones including 3-pentanone, 3-cyclohexanone, and methylethylketone; alcohols of 1-6 carbon atoms including methanol, ethanol, and propanol; and diols including ethyleneglycol and propyleneglycol.

The solvent for the shell polymer used in forming the hollow core may be at least one selected from the group consisting of cyclohexane, benzene, ethylbenzene, and acetone.

The alkali solution used in forming the hollow core may be a sodium hydroxide or potassium hydroxide solution; an ammonia solution; or a solution containing a volatile organic base selected from the group consisting of triethylamine, diethanolamine, and triethanolamine.

In forming the hollow core, the core polymer may be swollen in the presence of the alkali solution, the solvent for the core polymer, and the solvent for the shell polymer at pH of 6 to 12 and a temperature of 60 to 100 ˚C for 0.5 to 4 hours.

According to another aspect of the present invention, there is provided a hollow emulsion polymer prepared by the method and having an outer diameter of 0.1 to 5 $\mu$m, an inner diameter of 0.05 to 4 $\mu$m, a ratio of the inner diameter to the outer diameter of 0.1 to 0.9, and opacity of 65 to 99%.

The present invention will now be described in more detail.

The present invention provides a method of preparing a hollow emulsion polymer, which includes: preparing an alkali-swellable and hydrophilic core polymer; preparing a hydrophobic shell polymer to obtain a core/shell polymer; and forming a hollow core by swelling the core polymer in the presence of an alkali solution, a solvent for the core polymer, and a solvent for the shell polymer.

That is, the use of only an alkali solution during swelling of a core polymer like in a conventional preparation method makes it difficult to prevent shell destruction due to hollow core formation and to provide thin and uniform shells. Thus, the present invention is characterized by the use of a solvent for a core polymer for maximizing the degree of core swelling and a solvent for a shell polymer for facilitating a shell strength control, together with an alkali solution. In more detail, the use of a solvent for a core polymer during alkali-mediated core swelling facilitates the reaction of the core polymer with the alkali through dissolution of the core polymer in the solvent, thereby maximizing the degree of core swelling. When a solvent for a shell polymer is added during alkali-mediated core swelling, shell plasticization facilitates the migration of the alkali solution toward cores and induces shell swelling, together with core swelling. Furthermore, since the solvent for the shell polymer is removed by drying, intrinsic shell strength can be retained, which enables production of hollow particles containing thin shells with no distortion.

Hereinafter, each operation for the preparation method of the present invention will be described in detail.

In the preparation method of the present invention, first, an alkali-swellable and hydrophilic core polymer is prepared. The preparation method may further include preparing seed particles for size control of the core polymer prior to preparing the alkali-swellable and hydrophilic core polymer.

In preparing the seed particles, a mixture including a carboxyl group-containing monomer (commonly called as 'ethylenically unsaturated acid monomer') and a hydrophilic and nonionic monomer may be polymerized. At this time, a polymerization initiator and a chain transfer agent may be used. The monomer mixture may include 0 to 40 wt% of the carboxyl group-containing monomer and 60 to 100 wt% of the hydrophilic and nonionic monomer. The carboxyl group-containing monomer may not be used. However, the use of the carboxyl group-containing monomer can increase polymerization stability. The use of the carboxyl group-containing monomer in an amount of above 40 wt% may synthesize a homopolymer of the carboxyl group-containing monomer that may adversely affect polymerization stability.

The carboxyl group-containing monomer constituting the seed particles may he at least one selected from the group consisting of unsaturated carboxylic acids such as methacrylic acid, acrylic acid, itaconic acid, crotonic acid, fumaric acid, and maleic acid, and carboxylic esters such as itaconic acid monoethyl ester, fumaric acid monobutyl ester, and maleic acid monobutyl ester.

The hydrophilic and nonionic monomer constituting the seed particles may be at least one selected from the group consisting of unsaturated carboxyl acid alkyl esters such as methyl acrylate, methyl methacrylate, ethyl acrylate, ethyl methacrylate, butyl acrylate, butyl methacrylate, β-hydroxyethyl acrylate, β-hydroxypropyl acrylate, β-hydroxyethyl methacrylate, dimethylaminoethyl methacrylate, diethylaminoethyl methacrylate, and dimethylaminopropyl methacrylate; unsaturated carboxyl acid amides and derivatives thereof such as acrylamide, methacrylamide, itaconyl amide, maleic acid monoamide, N-methylolmethacrylamide, and a derivative thereof; vinyl acetate; and vinylpyridine.

Preferably, the chain transfer agent used for the preparation of the seed particles is a thiol-based compound. The thiol-based compound may be alkyl mercaptan having one thiol group per molecule such as n-dodecyl mercaptan and t-dodecyl mercaptan, or a multifunctional thiol-based compound having two or more thiol groups per molecule. Examples of the multifunctional thiol-based compound include 1,5-pentanedithiol, 1,6-hexanedithiol, 2-ethylhexyl-3-mercaptopropionate, butyl 3-mercaptopropionate, dodecyl 3-mercaptopropionate, ethyl 2-mercaptopropionate, ethyl 3-mercaptopropionate, methyl 3-mercaptopropionate, pentaerythritol tetrakis(3-mercaptopropionate), 2-ethylhexyl mercaptoacetate, ethyl 2-mercaptoacetate, 2-hydroxymethyl-2-methyl-1,3-propanethiol, and pentaerythritol tetrakis(2-mercaptoacetate). The multifunctional thiol-based compound as used herein may be at least one selected from the above-illustrated examples.

The polymerization initiator used for the preparation of the seed particles may be any water-soluble initiator that is used in thermolysis and redox reactions. The water-soluble initiator may be at least one selected from ammonium persulfate, potassium persulfate, and sodium persulfate. In this case, the reaction temperature may range from 60 to 90 ˚C . The water-soluble initiator may also be used as a mixture of it with a reducing agent such as sodium bisulfite and sodium formaldehyde sulfoxylate. In this case, the reaction temperature may range from 30 to 70 ˚C.

A core polymer formed on the seed particles is a hydrophilic and alkali-swellable polymer that can form a hollow core by swelling in the presence of an alkali. The core polymer may be obtained by polymerization of a mixture including a carboxyl group-containing monomer, a hydrophilic and nonionic monomer, and a crosslinkable monomer. An emulsifier and a polymerization initiator may be further used. The mixture may include 5 to 60 wt% of the carboxyl group-containing monomer, 30 to 94.95 wt% of the hydrophilic and nonionic monomer, and 0.05 to 10 wt% of the crosslinkable monomer. The emulsifier may be used in an amount of 0.1 to 10 parts by weight, based on 100 parts by weight of the mixture.

If the content of the carboxyl group-containing monomer exceeds 60 wt%, polymerization stability may be lowered. The use of the crosslinkable monomer in an amount of above 10 wt% may also lower polymerization stability.

The carboxyl group-containing monomer constituting the core polymer may be at least one selected from unsaturated carboxylic acids such as methacrylic acid, acrylic acid, itaconic acid, crotonic acid, fumaric acid, and maleic acid; and unsaturated carboxylic esters having at least one carboxyl group such as itaconic acid monoethyl ester, fumaric acid monobutyl ester, and maleic acid monobutyl ester.

The hydrophilic and nonionic monomer constituting the core polymer may be at least one selected from unsaturated carboxylic acid alkyl ester such as methyl acrylate, methyl methacrylate, ethyl acrylate, ethyl methacrylate, butyl acrylate, and butyl methacrylate; unsaturated carboxylic acid hydroxyalkyl esters such as β -hydroxyethyl acrylate, β -hydroxypropyl acrylate, and β -hydroxyethyl methacrylate; dimethylaminoethyl methacrylate; diethylaminoethyl methacrylate; dimethylaminopropyl methacrylate; unsaturated carboxyl acid amides such as acrylamide, methacrylamide, itaconyl amide, maleic acid monoamide, and N-methylolmethacrylamide, and derivatives thereof; vinyl acetate; and vinylpyridine.

Preferably, the crosslinkable monomer constituting the core polymer is a two vinyl group-containing compound. Examples of the two vinyl group-containing compound include aryl acrylate, aryl methacrylate, ethyleneglycol dimethacrylate, ethyleneglycol diacrylate, 1,6-hexanediol dimethacrylate, 1,6-hexanediol diacrylate, diaryl phthalate, and divinylbenzene. The crosslinkable monomer may be at least one selected from the above-illustrated examples.

The emulsifier used in the preparation of the core polymer may be one or more selected from anionic, nonionic, and cationic emulsifiers commonly used in emulsion polymerization.

The polymerization initiator used in the preparation of the core polymer may be the same as that used in the preparation of the seed particles.

After the core polymer is prepared, a shell polymer is formed on the core polymer to obtain a core-shell polymer.

The shell polymer is a hydrophobic resin and may be obtained by polymerization of a mixture including a conjugated diene monomer (commonly called as 'ethylenically unsaturated monomer') and a crosslinkable monomer including a three or more vinyl group-containing crosslinkable monomer. The polymerization for the shell polymer may be performed in the presence of an emulsifier and a polymerization initiator. The mixture may include 90 to 99.95 wt% of the conjugated diene monomer and 0.05 to 10 wt% of the crosslinkable monomer. If the content of the crosslinkable monomer exceeds 10 wt%, reaction stability may be lowered. On the other hand, if it is less than 0.05 wt%, shell strength may be too weak to form hollow particles.

The conjugated diene monomer constituting the shell polymer may be at least one selected from an aromatic vinyl monomer such as styrene, a -methylstyrene, ethylstyrene, vinyltoluene, p-methylstyrene, chlorostyrene, and vinylnaphthalene; unsaturated carboxylic acid alkyl ester such as methyl acrylate, methyl methacrylate, ethyl acrylate, ethyl methacrylate, butyl acrylate, and butyl methacrylate; unsaturated carboxylic acid hydroxyalkyl ester such as β -hydroxyethyl acrylate, β -hydroxypropyl acrylate, and β -hydroxyethyl methacrylate; dimethylaminoethyl methacrylate; diethylaminoethyl methacrylate; dimethylaminopropyl methacrylate; unsaturated carboxyl acid amide such as acrylamide, methacrylamide, itaconyl amide, maleic acid monoamide, and N-methylolmethacrylamide, and a derivative thereof; vinyl acetate; and vinylpyridine.

The three or more vinyl group-containing crosslinkable monomer constituting the shell polymer may be at least one selected from trimethylol propane triacrylate, trimethylol propane trimethacrylate, diaryl maleate, trans-farnesyl acetate, and pentaerythritol tetraacrylate.

The crosslinkable monomer for the shell polymer may further include a two vinyl group-containing crosslinkable monomer, in addition to the three or more vinyl group-containing crosslinkable monomer. The two vinyl group-containing crosslinkable monomer may be at least one selected from aryl acrylate, aryl methacrylate, ethyleneglycol dimethacrylate, ethyleneglycol diacrylate, 1,6-hexanediol dimethacrylate, 1,6-hexanediol diacrylate, diaryl phthalate, and divinylbenzene.

After the core-shell polymer is formed, the core polymer is swollen in the presence of an alkali to form a hollow core.

The operation of forming the hollow core is performed in the presence of a solvent for the core polymer and a solvent for the shell polymer, in addition to an alkali solution. The alkali solution as used herein may be a sodium hydroxide or potassium hydroxide solution; an ammonia solution; or a solution containing a volatile organic base selected from the group consisting of triethylamine, diethanolamine, and triethanolamine.

The solvent for the core polymer is at least one selected from the group consisting of tetrahydrofuran; chlorinated hydrocarbons such as dichloromethane and carbon tetrachloride; esters such as ethyl acetate, butyl acetate, and methyl benzoate; ketones such as 3-pentanone, 3-cyclohexanone, and methylethylketone; alcohols of 1-6 carbon atoms such as methanol, ethanol, and propanol; and diols such as ethyleneglycol and propyleneglycol.

Preferably, the solvent for the core polymer is used in an amount of 5 to 800 parts by weight based on 100 parts by weight of the core polymer. If the content of the solvent for the core polymer is less than 5 parts by weight, the degree of core swelling may be insufficient. On the other hand, if it exceeds 800 parts by weight, the degree of core swelling may be excessive, thereby leading to shell destruction of hollow particles.

The solvent for the shell polymer is at least one selected from the group consisting of cyclohexane, benzene, ethylbenzene, and acetone.

Preferably, the solvent for the shell polymer is used in an amount of 1 to 20 parts by weight based on 100 parts by weight of the shell polymer. If the content of the solvent for the shell polymer is less than 1 part by weight, shell plasticization may not occur. On the other hand, if it exceeds 20 parts by weight, shell plasticization may occur excessively, thereby leading to shell destruction.

The operation of forming the hollow core may be performed in such a manner that the alkali solution, the solvent for the core polymer, and the solvent for the shell polymer are incubated in a core-shell polymer-containing reactor at pH of 6 to 12 and a temperature of 60 to 100 ˚C for 0.5 to 4 hours.

The emulsion polymer thus prepared has a single hollow core having an outer diameter of 0.1 to 5 $\mu$m an inner diameter of 0.05 to 4 $\mu$m, and a ratio of the inner diameter to the outer diameter of 0.1 to 0.9. If the outer diameter is less than 0.1 $\mu$m, opacity may be lowered. On the other hand, the outer diameter above 5 $\mu$m may be difficult to be prepared by emulsion polymerization.

Meanwhile, the ratio of the inner diameter to the outer diameter of the hollow core is an important factor in determining the size of the hollow core. If the ratio of the inner diameter to the outer diameter is less than 0.1, opacity may be remarkably lowered due to excessive size-reduction of the hollow core. The hollow core having the ratio of the inner diameter to the outer diameter of above 0.9 may be difficult to be formed.

The opacity of an emulsion polymer having a hollow structure is determined by reflectance of light entered into the hollow structure. A uniform and undistorted hollow structure ensures excellent opacity. An emulsion polymer of the present invention has opacity of 65 to 99%. The opacity is evaluated according to paper-backing opacity represented by the following equation by measuring the reflectance of a coated paper backed by white and black backgrounds. If the paper-backing opacity is less than 1%, desired opaqueness may not be obtained:

$$\text{Paper-backing Opacity (\%)} = 100 * R_o / R_\infty$$

($R_o$ : black background reflectance, $R_\infty$ : white background reflectance)

The above-described hollow emulsion polymer is surrounded by a hydrophobic shell and thus the hollow structure is not destructed and a thin and uniform shell can be retained even upon drying or processing, which can be demonstrated by Transmission Electron Microscopic (TEM) analysis.

An emulsion polymer prepared by the method of the present invention exhibits excellent opacity and good resistance to alkali and water due to a hollow structure with uniform shell thickness, and thus can be applied in pigments, aqueous paints, paper coatings, information recording papers, and other synthetic resins.

**Advantageous Effects**

As described above, in a method of preparing a hollow emulsion polymer according to the present invention, a solvent for a core polymer is used in swelling of the core polymer with an alkali solution. Therefore, the degree of core swelling can be maximized. Furthermore, the use of a solvent for a shell polymer induces shell plasticization, thereby facilitating the migration of an alkali solution to cores and inducing shell swelling, in addition to core swelling. Therefore, thin and uniform shells with no distortion after drying are obtained. The hollow emulsion polymer thus prepared can be used as a substitute for a styrene polymer plastic pigment such as a titanium dioxide ($TiO_2$) or organic pigment, and furthermore can be applied in aqueous paints, paper coatings, information recording papers, synthetic resins, etc.

**Best Mode**

Hereinafter, the present invention will be described more specifically with reference to the following examples. The following examples are for illustrative purposes and are not intended to limit the scope of the invention.

Examples 1-10: Preparation of hollow emulsion polymers by swelling in the presence of alkali, solvent for core polymer, and solvent for shell polymer

[Example 1]

Preparation of seed particles

340 g of ion exchange water was added to a 1L 4-necked flask equipped with a stirrer, a thermometer, a reflux condenser, a dropping funnel, and a nitrogen inlet tube and heated to 75 ˚C with nitrogen replacement, and a solution of 0.09 g of potassium persulfate used as a polymerization initiator in 4.41g of ion exchange water was added thereto. Then, a mixture composed of 8.82g of ion exchange water, 8.37 g of methyl methacrylate used as a hydrophilic and nonionic monomer, 0.44g of methacrylic acid used as a carboxyl group-containing monomer, and 0.13 g of pentaerythritol tetrakis (3-mercaptopropionate) used as a chain transfer agent was added to the flask and stirred for 180 minutes to thereby obtain seed particles.

The seed particles were monodisperse particles having a solid of 2.5 wt% and an average particle size of 0.25 □.

Preparation of core polymer

A reactor filled with the above-prepared seed particles was adjusted to 75 ˚C and a solution of 0.12g of potassium persulfate used as a polymerization initiator in 5.88g of ion exchange water was added thereto. Then, a mixture composed of 30.61g of ion exchange water, 21.30g of methyl methacrylate and 1.70g of butyl acrylate used as hydrophilic and nonionic monomers, 12.00 g of methacrylic acid used as a carboxyl group-containing monomer, 0.26 g of aryl methacrylate used as a crosslinkable monomer, and 0.77g of polyoxyethylene decyl ether sodium sulfonate used as an emulsifier was continuously added to the reactor for 240 minutes with stirring and further stirred for 120 minutes to thereby obtain a core polymer.

The core polymer was a monodisperse polymer having a solid of 10.2 wt% and an average particle size of 0.50□.

Preparation of core-shell polymer

157.6g of ion exchange water was added to a 1L four-necked flask containing 246.18 g of the above-prepared core polymer and heated to 75 ˚C , and a solution of 1.0g of potassium persulfate used as a polymerization initiator in 39.2g of ion exchange water was added thereto. Then, a mixture composed of 52.81g of ion exchange water, 160.61g of styrene and 9.73g of butyl acrylate as conjugated diene monomers, 4.66g of trimethylol propane triacrylate used as a crosslinkable and multifunctional monomer, and 1.88g of polyoxyethylene decyl ether sodium sulfonate used as an emulsifier was continuously added to the flask for 300 minutes and stirred. Then, the reaction solution was aged at the same temperature for 120 minutes to thereby obtain a core-shell polymer in which the core polymer was coated with a shell polymer.

The core-shell polymer was a monodisperse polymer having a solid of 28.76 wt% and an average particle size of 0.82□.

Formation of hollow polymer by swelling core polymer

After being aged, the core-shell polymer was heated to 90 ˚C , and 20g of ethanol used as a solvent for the core polymer and 5g of acetone used as a solvent for the shell polymer were added thereto. Then, 8.5g of an ammonia solution was added so that pH of the core-shell polymer was 10.8 and then the reaction mixture was incubated for two hours so that swelling of the core polymer occurred. As a result, a hollow polymer was finally obtained.

The finally obtained polymer was observed by TEM and the TEM observation results are presented in Table 1 below.

[Example 2]

A hollow polymer was prepared in the same manner as in Example 1 except that swelling for hollow core formation was performed in the presence of 40g of ethanol used as a solvent for a core polymer, 5g of acetone used as a solvent for a shell polymer, and 8.7g of an ammonia solution.

The hollow polymer was observed by TEM and the TEM observation results are presented in Table 1 below.

[Example 3]

A hollow polymer was prepared in the same manner as in Example 1 except that swelling for hollow core formation was performed in the presence of 20g of ethanol used as a solvent for a core polymer, 10g of acetone used as a solvent for a shell polymer, and 8.8g of an ammonia solution.

The hollow polymer was observed by TEM and the TEM observation results are presented in Table 1 below.

[Example 4]

A hollow polymer was prepared in the same manner as in Example 1 except that swelling for hollow core formation was performed in the presence of 40g of ethanol used as a solvent for a core polymer, 10g of acetone used as a solvent for a shell polymer, and 8.5g of an ammonia solution.

The hollow polymer was observed by TEM and the TEM observation results are presented in Table 1 below.

[Example 5]

A hollow polymer was prepared in the same manner as in Example 1 except that swelling for hollow core formation was performed in the presence of 60g of ethanol used as a solvent for a core polymer, 10g of acetone used as a solvent for a shell polymer, and 8.6g of an ammonia solution.

The hollow polymer was observed by TEM and the TEM observation results are presented in Table 1 below.

[Example 6]

A hollow polymer was prepared in the same manner as in Example 1 except that swelling for hollow core formation was performed in the presence of 30g of isopropanol/methylethylketone (MEK)(1:1) used as a solvent for a core polymer, 10g of acetone used as a solvent for a shell polymer, and 8.6g of an ammonia solution.

The hollow polymer was observed by TEM and the TEM observation results are shown in Table 1 below.

[Example 7]

A hollow polymer was prepared in the same manner as in Example 1 except that swelling for hollow core formation was performed in the presence of 50g of isopropanol/MEK (1:1) used as a solvent for a core polymer, 10g of acetone used as a solvent for a shell polymer, and 8.7g of an ammonia solution.

The hollow polymer was observed by TEM and the TEM observation results are presented in Table 1 below.

[Example 8]

A hollow polymer was prepared in the same manner as in Example 1 except that swelling for hollow core formation was performed in the presence of 60g of ethanol used as a solvent for a core polymer, 2g of cyclohexane used as a solvent for a shell polymer, and 8.6g of an ammonia solution.

The hollow polymer was observed by TEM and the TEM observation results are presented in Table 1 below.

[Example 9]

A hollow polymer was prepared in the same manner as in Example 1 except that swelling for hollow core formation was performed in the presence of 60g of ethanol used as a solvent for a core polymer, 5g of cyclohexane used as a solvent for a shell polymer, and 8.6g of an ammonia solution.

The hollow polymer was observed by TEM and the TEM observation results are presented in Table 1 below.

[Example 10]

A hollow polymer was prepared in the same manner as in Example 1 except that swelling for hollow core formation was performed in the presence of 50g of isopropanol/MEK (1:1) used as a solvent for a core polymer, 5g of cyclohexane used as a solvent for a shell polymer, and 8.5 g of an ammonia solution.

The hollow polymer was observed by TEM and the TEM observation results are presented in Table 1 below.

Comparative Examples 1-9: Preparation of hollow emulsion polymers by swelling with alkali in the absence of solvent for core polymer or solvent for shell polymer

[Comparative Example 1]

A hollow polymer was prepared in the same manner as in Example 1 except that swelling for hollow core formation was performed only in the presence of 8.3g of an ammonia solution used as an alkali solution. The hollow polymer was observed by TEM and the TEM observation results are presented in Table 1 below.

[Comparative Example 2]

A hollow polymer was prepared in the same manner as in Example 1 except that swelling for hollow core formation was performed only in the presence of 8.7g of an ammonia solution used as an alkali solution and 60g of ethanol used as a solvent for a core polymer. The hollow polymer was observed by TEM and the TEM observation results are presented in Table 1 below.

[Comparative Example 3]

A hollow polymer was prepared in the same manner as in Example 1 except that swelling for hollow core formation was performed only in the presence of 8.8g of an ammonia solution used as an alkali solution and 100g of ethanol used as a solvent for a core polymer. The hollow polymer was observed by TEM and the TEM observation results are presented in Table 1 below.

[Comparative Example 4]

A hollow polymer was prepared in the same manner as in Example 1 except that swelling for hollow core formation was performed only in the presence of 8.6g of an ammonia solution used as an alkali solution and 50g of isopropanol/MEK (1:1) used as a solvent for a core polymer. The hollow polymer was observed by TEM and the TEM observation results are presented in Table 1 below.

[Comparative Example 5]

A hollow polymer was prepared in the same manner as in Example 1 except that swelling for hollow core formation was performed only in the presence of 8.7g of an ammonia solution used as an alkali solution and 80g of isopropanol/MEK (1:1) used as a solvent for a core polymer. The hollow polymer was observed by TEM and the TEM observation results are presented in Table 1 below.

[Comparative Example 6]

A hollow polymer was prepared in the same manner as in Example 1 except that swelling for hollow core formation was performed only in the presence of 8.3g of an ammonia solution used as an alkali solution and 10g of acetone used as a solvent for a shell polymer. The hollow polymer was observed by TEM and the TEM observation results are presented in Table 1 below.

[Comparative Example 7]

A hollow polymer was prepared in the same manner as in Example 1 except that swelling for hollow core formation was performed only in the presence of 8.4g of an ammonia solution used as an alkali solution and 20g of acetone used as a solvent for a shell polymer. The hollow polymer was observed by TEM and the TEM observation results are presented in Table 1 below.

[Comparative Example 8]

A hollow polymer was prepared in the same manner as in Example 1 except that swelling for hollow core formation was performed only in the presence of 8.3g of an ammonia solution used as an alkali solution and 5g of cyclohexane used as a solvent for a shell polymer. The hollow polymer was observed by TEM and the TEM observation results are presented in Table 1 below.

[Comparative Example 9]

A hollow polymer was prepared in the same manner as in Example 1 except that swelling for hollow core formation was performed only in the presence of 8.3g of an ammonia solution used as an alkali solution and 8g of cyclohexane used as a solvent for a shell polymer. The hollow polymer was observed by TEM and the TEM observation results are presented in Table 1 below.

Opacity measurement

To comparatively evaluate the latexes prepared in Examples and Comparative Examples, a paper coating solution was prepared according to the following prescription:

Hollow particle latex 50 parts by weight

Calcium carbonate 50 parts by weight

Styrene-butadiene latex 12 parts by weight

Distilled water was added until a solid in the coating solution reached 60%.

The thus-prepared coating solution was coated on papers as the following conditions to obtain coated papers.

Paper: white or black

Coating: Rod Coating, No 12

Drying: oven, 105 ˚C, 30 sec.

Reflectance of the coated papers backed by white and black backgrounds was measured and opacity was evaluated according to the following equation. The results are presented in Table 1 below:

$$\text{Paper-backing Opacity (\%)} = 100 * R_o / R_\infty$$

($R_o$ : black background reflectance, $R_\infty$ : white background reflectance)

Table 1

| Sample | Particle size after swelling ($\mu$m) | Hollow core size after swelling ($\mu$m) | Shell thickness after swelling ($\mu$m) | Presence of destructed or distorted shells after swelling | Opacity (%) |
|---|---|---|---|---|---|
| Example 1 | 0.96 | 0.72 | 0.12 | X | 77 |
| Example 2 | 0.98 | 0.76 | 0.11 | Δ | 79 |

(continued)

| Sample | Particle size after swelling (μm) | Hollow core size after swelling (μm) | Shell thickness after swelling (μm) | Presence of destructed or distorted shells after swelling | Opacity (%) |
|---|---|---|---|---|---|
| Example 3 | 0.99 | 0.77 | 0.11 | X | 85 |
| Example 4 | 1.01 | 0.79 | 0.10 | X | 86 |
| Example 5 | 1.02 | 0.84 | 0.09 | X | 93 |
| Example 6 | 0.99 | 0.77 | 0.11 | X | 84 |
| Example 7 | 1.01 | 0.79 | 0.11 | X | 85 |
| Example 8 | 0.99 | 0.75 | 0.12 | Δ | 75 |
| Example 9 | 1.00 | 0.78 | 0.11 | X | 84 |
| Example 10 | 1.00 | 0.76 | 0.12 | X | 82 |
| Comparative Example 1 | 0.92 | 0.62 | 0.15 | ◎ | 46 |
| Comparative Example 2 | 0.95 | 0.69 | 0.13 | Δ | 55 |
| Comparative Example 3 | 0.97 | 0.73 | 0.12 | ◎ | 57 |
| Comparative Example 4 | 0.92 | 0.64 | 0.14 | Δ | 52 |
| Comparative Example 5 | 0.94 | 0.68 | 0.13 | ○ | 54 |
| Comparative Example 6 | 0.94 | 0.68 | 0.13 | ○ | 54 |
| Comparative Example 7 | 0.97 | 0.73 | 0.12 | ◎ | 58 |
| Comparative Example 8 | 0.93 | 0.63 | 0.15 | Δ | 50 |
| Comparative Example 9 | 0.95 | 0.67 | 0.14 | ○ | 53 |

Particle size after shell polymerization = 0.82 μm

Polymer solid = 28.15 wt%

The used amount of polymer = 358.6g (seed+core=12.5g and shell=87.5g based on 100 g of the solid)

NH OH 28% solution 4

X : absence, Δ : less than 10%, ○ : 10-50%, ◎ : more than 50%

As presented in Table 1, the emulsion polymers prepared in Examples 1-10 according to the present invention, in which swelling for hollow core formation was performed in the presence of a solvent for a core polymer and a solvent for a shell polymer, exhibited a larger particle size and a larger hollow core size with no destructed or distorted shells after swelling, as compared to the emulsion polymer prepared in Comparative Example 1 in which swelling for hollow core formation was performed in the absence of a solvent for a core polymer and a solvent for a shell polymer, the emulsion polymers prepared in Comparative Examples 2-5 in which swelling for hollow core formation was performed in the absence of a solvent for a shell polymer, and the emulsion polymers prepared in Comparative Examples 5-8 in which swelling for hollow core formation was performed in the absence of a solvent for a core polymer.

Furthermore, the emulsion polymers prepared in Examples 1-10 exhibited excellent opacity of 75 to 93%.

**Claims**

1. A method of preparing a hollow emulsion polymer, the method comprising:

   preparing an alkali-swellable and hydrophilic core polymer;
   preparing a hydrophobic shell polymer to obtain a core/shell polymer; and
   forming a hollow core by swelling the core polymer in the presence of an alkali solution, a solvent for the core polymer, and a solvent for the shell polymer, wherein the solvent for the core polymer used in forming the hollow core is at least one selected from the group consisting of tetrahydrofuran; chlorinated hydrocarbons comprising dichloromethane and carbon tetrachloride; esters comprising ethyl acetate, butyl acetate, and methyl benzoate; 3-pentanone, 3-cyclohexanone and methylehtylketone; alcohols of 1-6 carbon atoms comprising methanol, ethanol, and propanol; and diols comprising ehtyleneglycol and propyleneglycol, wherein the solvent for the shell polymer used in forming the hollow core is at least one selected from the group consisting of cyclohexane, benzene, ethylbenzene, and acetone.

2. The method of claim 1, further comprising preparing seed particles to control the size of the core polymer prior to preparing the core polymer.

3. The method of claim 2, wherein in preparing the seed particles, a mixture comprising a carboxyl group-containing monomer and a hydrophilic and nonionic monomer is polymerized.

4. The method of claim 3, wherein in preparing the seed particles, a mixture comprising 0 to 40 wt% of a carboxyl group-containing monomer and 60 to 100 wt% of a hydrophilic and nonionic monomer is polymerized.

5. The method of claim 1, wherein in preparing the core polymer, a mixture comprising a carboxyl group-containing monomer, a hydrophilic and nonionic monomer, and a crosslinkable monomer is polymerized.

6. The method of claim 5, wherein in preparing the core polymer, a mixture comprising 5 to 60 wt% of a carboxyl group-containing monomer, 30 to 94.95 wt% of a hydrophilic and nonionic monomer, and 0.05 to 10 wt% of a crosslinkable monomer is polymerized.

7. The method of claim 1, wherein in preparing the shell polymer, a mixture comprising a conjugated diene monomer and a crosslinkable monomer comprising a three or more vinyl group-containing crosslinkable monomer is polymerized.

8. The method of claim 7, wherein in preparing the shell polymer, a mixture comprising 90-99.95 wt% of a conjugated diene monomer and 0.05 to 10 wt% of a crosslinkable monomer comprising a three or more vinyl group-containing crosslinkable monomer is polymerized.

9. The method of claim 1, wherein the alkali solution used in forming the hollow core is a sodium hydroxide or potassium hydroxide solution; an ammonia solution; or a solution selected from the group consisting of triethylamine, diethanolamine, and triethanolamine.

10. The method of claim 1, wherein in forming the hollow core, the core polymer is swollen in the presence of the alkali solution, the solvent for the core polymer, and the solvent for the shell polymer at pH of 6 to 12 and a temperature of 60 to 100˚C for 0.5 to 4 hours.

11. The method of claim 1, wherein in forming the hollow core, the solvent for the core polymer is used in an amount of 5 to 800 parts by weight based on 100 parts by weight of the core polymer.

12. The method of claim 1, wherein in forming the hollow core, the solvent for the shell polymer is used in an amount of 1 to 20 parts by weight based on 100 parts by weight of the shell polymer.

13. A hollow emulsion polymer prepared by the method of any one of claims 1 through 12 and having an outer diameter of 0.1 to 5 $\mu$m, an inner diameter of 0.05 to 4 $\mu$m, a ratio of the inner diameter to the outer diameter of 0.1 to 0.9, and opacity of 65 to 99% measured according to the procedure described in par. [120]-[132] of the description.

**Patentansprüche**

1. Verfahren zum Herstellen eines hohlen Emulsionspolymers, wobei das Verfahren umfasst:

   Herstellen eines Alkali-quellbaren und hydrophilen Kernpolymers;
   Herstellen eines hydrophoben Mantelpolymers, um ein Kern/Mantel-Polymer zu erhalten; und
   Bilden eines hohlen Kerns durch Quellen des Kernpolymers in der Gegenwart einer Alkalilösung, eines Lösungsmittels für das Kernpolymer und eines Lösungsmittels für das Mantelpolymer, wobei das Lösungsmittel für das Kernpolymer, das beim Bilden des hohlen Kerns verwendet wird, wenigstens eines ist ausgewählt aus der Gruppe bestehend aus Tetrahydrofuran; chlorierten Kohlenwasserstoffen umfassend Dichlormethan und Kohlenstofftetrachlorid; Estern umfassend Ethylacetat, Butylacetat und Methylbenzoat; 3-Pentanon, 3-Cyclohexanon und Methylethylketon; Alkoholen mit 1-6 Kohlenstoffatomen umfassend Methanol, Ethanol und Propanol; und Diolen umfassend Ethylenglykol und Propylenglykol, wobei das Lösungsmittel für das Mantelpolymer, das beim Bilden des hohlen Kerns verwendet wird, wenigstens eines ist ausgewählt aus der Gruppe bestehend aus Cyclohexan, Benzol, Ethylbenzol und Aceton.

2. Verfahren nach Anspruch 1, weiter umfassend ein Herstellen von Keimteilchen, um die Größe des Kernpolymers vor dem Herstellen des Kernpolymers zu steuern.

3. Verfahren nach Anspruch 2, wobei beim Herstellen der Keimteilchen eine Mischung polymerisiert wird, die ein Carboxylgruppe enthaltendes Monomer und ein hydrophiles und nicht-ionisches Monomer umfasst.

4. Verfahren nach Anspruch 3, wobei beim Herstellen der Keimteilchen eine Mischung polymerisiert wird, die 0 bis 40 Gew.-% eines Carboxylgruppe enthaltenden Monomers und 60 bis 100 Gew.-% eines hydrophilen und nicht-ionischen Monomers umfasst.

5. Verfahren nach Anspruch 1, wobei beim Herstellen des Kernpolymers eine Mischung polymerisiert wird, die ein Carboxylgruppe enthaltendes Monomer, ein hydrophiles und nicht-ionisches Monomer und ein vernetzbares Monomer umfasst.

6. Verfahren nach Anspruch 5, wobei beim Herstellen des Kernpolymers eine Mischung polymerisiert wird, die 5 bis 60 Gew.-% eines Carboxylgruppe enthaltenden Monomers, 30 bis 94,95 Gew.-% eines hydrophilen und nicht-ionischen Monomers und 0,05 bis 10 Gew.-% eines vernetzbaren Monomers umfasst.

7. Verfahren nach Anspruch 1, wobei beim Herstellen des Mantelpolymers eine Mischung polymerisiert wird, die ein konjugiertes Dienmonomer und ein vernetzbares Monomer umfassend ein drei oder mehr Vinylgruppen enthaltendes vernetzbares Monomer umfasst.

8. Verfahren nach Anspruch 7, wobei beim Herstellen des Mantelpolymers eine Mischung polymerisiert wird, die 90-99,95 Gew.-% eines konjugierten Dienmonomers und 0,05 bis 10 Gew.-% eines vernetzbaren Monomers umfassend ein drei oder mehr Vinylgruppen enthaltendes vernetzbares Monomer umfasst.

9. Verfahren nach Anspruch 1, wobei die Alkalilösung, die beim Bilden des hohlen Kerns verwendet wird, eine Natriumhydroxid- oder Kaliumhydroxidlösung; eine Ammoniaklösung; oder eine Lösung ausgewählt aus der Gruppe bestehend aus Triethylamin, Diethanolamin und Triethanolamin ist.

10. Verfahren nach Anspruch 1, wobei beim Bilden des hohlen Kerns das Kernpolymer in der Gegenwart der Alkalilösung, des Lösungsmittels für das Kernpolymer und des Lösungsmittels für das Mantelpolymer bei einem pH-Wert von 6 bis 12 und einer Temperatur von 60 bis 100˚C für 0,5 bis 4 Stunden aufgequollen wird.

11. Verfahren nach Anspruch 1, wobei beim Bilden des hohlen Kerns das Lösungsmittel für das Kernpolymer in einer Menge von 5 bis 800 Gewichtsteilen basierend auf 100 Gewichtsteilen des Kernpolymers verwendet wird.

12. Verfahren nach Anspruch 1, wobei beim Bilden des hohlen Kerns das Lösungsmittel für das Mantelpolymer in einer Menge von 1 bis 20 Gewichtsteilen basierend auf 100 Gewichtsteilen des Mantelpolymers verwendet wird.

13. Hohles Emulsionspolymer, hergestellt durch das Verfahren nach einem der Ansprüche 1 bis 12 und mit einem äußeren Durchmesser von 0,1 bis 5 $\mu$m, einem inneren Durchmesser von 0,05 bis 4 $\mu$m, einem Verhältnis des

inneren Durchmessers zum äußeren Durchmesser von 0,1 bis 0,9 und einer Opazität von 65 bis 99%, gemessen gemäß der in Abschnitten [120]-[132] der Beschreibung beschriebenen Vorgehensweise.

**Revendications**

1. Méthode de préparation d'un polymère d'émulsion creux, la méthode comprenant les étapes qui consistent à :

   préparer un polymère à pouvoir gonflant en milieu alcalin et à noyau hydrophile ;
   préparer un polymère enveloppe hydrophobe en vue d'obtenir un polymère noyau/enveloppe ; et
   former un noyau creux en faisant gonfler le polymère noyau en la présence d'une solution alcaline, un solvant pour le polymère noyau, et un solvant pour le polymère enveloppe, dans laquelle le solvant pour le polymère noyau utilisé pour former le noyau creux est au moins un sélectionné parmi le groupe constitué par le tétrahydrofurane ; des hydrocarbures chlorés comprenant le dichlorométhane et le tétrachlorure de carbone ; des esters comprenant l'acétate d'éthyle, l'acétate de butyle et le benzoate de méthyle ; le 3-pentanone, le 3-cyclohexanone et la méthyléthylcétone ; des alcools des atomes de carbone 1 - 6 comprenant le méthanol, l'éthanol et le propanol ; et des diols comprenant l'éthylèneglycol et le propylèneglycol, dans laquelle le solvant pour le polymère enveloppe utilisé pour former le noyau creux est au moins un sélectionné parmi le groupe constitué par le cyclohexane, le benzène, l'éthylbenzène et l'acétone.

2. Méthode selon la revendication 1 comprenant, en outre, la préparation de particules de graines en vue de contrôler la taille du polymère noyau avant de préparer le polymère noyau.

3. Méthode selon la revendication 2 dans laquelle, lors de la préparation des particules de graines, un mélange comprenant un monomère contenant un groupe carboxyle et un monomère hydrophile et non ionique est polymérisé.

4. Méthode selon la revendication 3 dans laquelle, lors de la préparation des particules de graines, un mélange comprenant 0 à 40 % en poids d'un monomère contenant un groupe carboxyle et 60 à 100 % en poids d'un monomère hydrophile et non ionique est polymérisé.

5. Méthode selon la revendication 1 dans laquelle, lors de la préparation du polymère noyau, un mélange comprenant un monomère contenant un groupe carboxyle, un monomère hydrophile et non ionique, et un monomère réticulé chimiquement est polymérisé.

6. Méthode selon la revendication 5 dans laquelle, lors de la préparation du polymère noyau, un mélange comprenant 5 à 60 % en poids d'un monomère contenant un groupe carboxyle, 30 à 94,95 % en poids d'un monomère hydrophile et non ionique, et 0,05 à 10 % en poids d'un monomère réticulé chimiquement est polymérisé.

7. Méthode selon la revendication 1 dans laquelle, lors de la préparation du polymère enveloppe, un mélange comprenant un monomère diène conjugué et un monomère réticulé chimiquement comprenant un monomère réticulé chimiquement contenant trois ou plusieurs groupes vinyle, est polymérisé.

8. Méthode selon la revendication 7 dans laquelle, lors de la préparation du polymère enveloppe, un mélange comprenant 90 à 99,95 % en poids d'un monomère diène conjugué et 0,05 à 10 % en poids d'un monomère réticulé chimiquement comprenant un monomère réticulé chimiquement contenant trois ou plusieurs groupes vinyle est polymérisé.

9. Méthode selon la revendication 1 dans laquelle la solution alcaline utilisée pour former le noyau creux est une solution d'hydroxyde de sodium ou d'hydroxyde de potassium ; une solution ammoniaquée ; ou une solution sélectionnée parmi le groupe constitué par la triéthylamine, la diéthanolamine, et la triéthanolamine.

10. Méthode selon la revendication 1 dans laquelle, lors de la formation du noyau creux, on fait gonfler le polymère noyau en la présence de la solution alcaline, le solvant pour le polymère noyau, et le solvant pour le polymère enveloppe à un pH compris entre 6 et 12 et sous une température comprise entre 60 et 100° C pendant 0,5 à 4 heures.

11. Méthode selon la revendication 1 dans laquelle, lors de la formation du noyau creux, le solvant pour le polymère noyau est utilisé en une quantité de 5 à 800 parties en poids, sur la base de 100 parties en poids du polymère noyau.

**12.** Méthode selon la revendication 1 dans laquelle, lors de la formation du noyau creux, le solvant pour le polymère enveloppe est utilisé en une quantité de 1 à 20 parties en poids, sur la base de 100 parties en poids du polymère enveloppe.

**13.** Polymère creux d'émulsion préparé selon la méthode de n'importe laquelle des revendications 1 à 12 et ayant un diamètre extérieur de 0,1 à 5 $\mu$m, un diamètre intérieur de 0,05 à 4 $\mu$m, un rapport du diamètre intérieur au diamètre extérieur de 0,1 à 0,9, et une opacité de 65 à 99 %, mesurée selon la procédure décrite dans les paragraphes [120] - [132] de la description.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 177182

- KR 200249174